# EUROPEAN PATENT APPLICATION

(11) **EP 2 015 593 A1**
(43) Date of publication of application: **14.01.2009**
(21) Application number: 07720332.1
(22) Date of filing: 06.03.2007
(51) Int. Cl.: H04Q 7/32

(54) **METHOD AND DEVICE FOR CONTROLLING THE FUNCTION OF MOIBLE COMMUNICATION DEVICE**

(30) Priority: 13.04.2006 CN 200610066627
(71) Applicant: Huawei Technologies Co., Ltd., Longgang District, Shenzhen, Guangdong 518129 (CN)
(72) Inventor: LA, Huer, Guangdong 518129 (CN); YU, Qian, Guangdong 518129 (CN)
(74) Representative: Hengelhaupt, Jürgen
(86) International application number: PCT/CN2007/000711
(87) International publication number: WO 2007/118403

(57) **Abstract**

A method for controlling the function of mobile communication device includes: comparing the current location information of mobile communication device with preset location information which relating with the device function, and controlling the device function according to the compare result. The invention could be realized in the way of main control of mobile communication device itself or based on present tool packet technology or air technology. Corresponding with the different main control manner, the realizing scheme of device could be provided in the invention. The conflict between limited setting because of information security requirement of organization and advanced device but not frequent switching devices use requirement of stuff could be solved in the invention, and the same communication device could change function static according to the different location,

## Description

The application claims the priority of Chinese Patent Application No. 200610066627.2, submitted on April 13, 2006 and entitled "Method and Device for Controlling Functions of Mobile Equipment", the contents of which are incorporated herein by reference in their entirety.

### Field of the Invention

The invention relates to control technologies of mobile communications, and more particularly, to a method and a device for controlling functions of a Mobile Equipment (ME).

### Background of the Invention

With the continuing progress of the society, information security is drawing more attention, particularly in research and development areas. The rapid development of communication technology makes the management of information security increasingly more difficult. Mobile equipments, such as mobile phones, are provided with more and more powerful functions, including high-definition photography/videography, recording, multimedia playing, accessible high-speed data transmission and large storage capacity, etc. Those functions, on one hand, bring great convenience to the users of the mobile equipments, but on another hand, cause the research and development organizations with diverse secrecy requirements to face a graver threat on information security.

To ensure information security, some companies and organizations have to make various forbiddances. For example, the use of mobile phones with camera or USB interface is forbidden in some business places. As a result, their employees have no choice but to use low-end mobile phones without such functions. This may bring inconvenience to the employees. If an employee wishes to have a mobile phone with rich functions, he may have to take two mobile phones, one for using in the business places and the other one for using in non-business places.

At present, in mobile communication networks, there are multiple approaches to determine a location of a mobile subscriber. Among the approaches, the most fundamental one is a cell identifying approach commonly utilized in cell networks, such as Global System of Mobile Communication (GSM), Code Division Multiple Access (CDMA) and Universal Mobile Telecommunications System (UMTS). In a particular network, each cell has a globally unique identification code. An area necessarily falls in one or more cells as long as the area is within the coverage of the network. Therefore, a cell identification code or a set of cell identification codes may be used to identify the locations of the areas within the coverage of the network.

For example, in a GSM network, a cell identification code is called a Global Cell Identity (GCI), with a format of Mobile Country Code (MCC)-Mobile Network Code (MNC)-Location Area Code (LAC)-Cell Identity (CI). An area within the coverage of the GSM network may receive signals from multiple base stations, and thus may be covered by multiple GICs. However, according to a network communication rule, a mobile terminal will choose to communicate with a base station identified by a GIC with the strongest signal intensity. Consequently, the area in which a mobile terminal is located may be determined based on the GIC. GICs used in communications may be utilized by networks and mobile phones. At present, GICs are mainly used to provide services for positioning mobile users.

In addition to the fundamental cell identifying approach, there are a number of more precise positioning approaches, such as Observed Time Difference Of Arrival (OTDOA), Observed Time of Arrival (OTOA), Global Positioning System (GPS) and Angle of Arrival (AOA). These positioning approaches are implemented on the basis of functions of networks and/or mobile equipments, and may provide positioning with a precision ranging from tens of meters to thousands of meters. Being different from each other, these positioning approaches each may provide location information with a unique expression in the measurement range, for example, longitude and latitude as employed by the GPS, which is the similar to the global cell identify(GIC) in the cell identifying approach.

In various mobile communication networks, a User Equipment (UE) generally includes a user identity module, in addition to a Mobile Equipment (ME). The user identity module, such as a Subscriber Identity Module (SIM) in the GSM network, a Removable User Identity Module (RUIM) in the CDMA network, a Universal Integrated Circuit Card (UICC) in the UMTS network and a Universal SIM (USIM), is a smart card with a microprocessor and originally serves to provide a function of user identity authentication for the networks. To accommodate the rapid popularization of value-added services, the user identity module is provided with a variety of toolkits, for example, an SIM Application Toolkit (SAT) for the GSM network, a RUIM Application Toolkit for the CDMA network, a Universal SIM Application Toolkit (USAT) and a USAT Interpreter (USAT-I) for the UMTS network. Each of these application toolkits is substantively a group of instructions specifying in detail how the smart card of the user identity module interacts with the external and expanding protocols used in communication between the smart card and the user equipment, thereby enabling the user identity module to function more effectively in the mobile phone.

For example, in GSM, a standard for the SIM Application Toolkit has been specified. The standard provides a powerful platform in the SIM, allowing a great number of applets running in the SIM to initiate an SIM-external operation on the mobile phone conforming to the standard. The SIM-external operation may be, for example, direct interaction with a user of a mobile phone by setting a menu in the mobile phone and by performing an input operation and an output operation; the obtaining of information related to the network, such as the location of the mobile phone and the signal intensity; and the logging of events occurring in the mobile phone, such as an incoming call, a short message, active or inactive state of the user. In summary, the use of the application toolkits provides the applets running in the user identity module with interfaces for initiatively controlling the ME.

At present, the network may operate and configure the ME and/or its user identity module (smart card) remotely by use of the Over-The-Air (OTA) technology. The OTA technology is mainly used to provide value-added services, such as program/game/music download and data update. At present, the OTA technology is implemented through a short message OTA channel. The network sends a service request to an OTA gateway. The OTA gateway converts the service request into a short message and sends the short message to a Short Message Service Centre (SMSC). The short message service centre transmits the short message to one or more designated UEs. Thereby, the MEs and/or the user identity modules in the UEs supporting OTA functionality may obtain the contents of the service request.

### Summary of the Invention

Embodiments of the present invention provide a method and a device for controlling functions of a mobile equipment, so that the mobile equipment may have different function states on different locations.

Technical solutions according to the embodiments of the present invention are described as follows.

A method for controlling functions of a mobile equipment is provided, the method includes:
obtaining current location information of a mobile equipment;
comparing the current location information with preconfigured location information associated with a function state of the mobile equipment; and
controlling a function of the mobile equipment according to a result of the comparing.

An embodiment of the present invention provides a device for implementing the above method as follows.

A mobile equipment according to an embodiment, including:
an application unit, adapted to implement an application function of the mobile equipment according to a diver program of the application unit; and
a program controlling unit, adapted to provide program control associated with the driver program of the application unit to a user interface of the mobile equipment;
wherein the mobile equipment further includes:
a positioning unit, adapted to obtain current location information of the mobile equipment from a network periodically;
a location shield list storing unit, adapted to store location information associated with a function state of the application unit of the mobile equipment; and
a function controlling unit, adapted to compare the current location information obtained by the positioning unit with the location information stored in the location shield list storing unit, and send an enabling or disabling instruction to the driver program of the application unit, or send a control instruction to the program controlling unit to add or delete the application function to or from a control interface of the program controlling unit, according to a result of the comparing.

An embodiment of a mobile user equipment includes a mobile equipment and a user identity module. The mobile equipment is substantially identical to the mobile equipment described above, except that the location shield list storing unit is disposed in the user identity module instead of being disposed in the mobile equipment.

An embodiment of a user identity module includes a toolkit program interface, a location shield list storing unit and a function controlling unit. The toolkit program interface is adapted to provide a control interface for the user identity module to control a mobile equipment of the user identity module. The location shield list storing unit is adapted to store location information associated with a function state of the mobile equipment. The function controlling unit is adapted to obtain current location information of the mobile equipment from the mobile equipment, compare the current location information with the location information stored in the location shield list storing unit, and control an application function of the mobile equipment through the toolkit program interface according to a result of the comparing.

An embodiment of a mobile user equipment includes a mobile equipment and a user identity module. The user identity module is substantially identical to the user identity module described above, except that the location shield list storing unit is disposed in the mobile equipment instead of being disposed in the user identity module.

An embodiment of a network server used in a mobile communication system includes a positioning unit, an on-air control interface, a location shield list storing unit and a function controlling unit. The positioning unit is adapted to obtain current location information of a mobile equipment periodically. The over-the-air control interface is adapted to provide a control interface for the network server to control the mobile equipment. The location shield list storing unit is adapted to store location information associated with a function state of the mobile equipment. The function controlling unit is adapted to compare the current location information obtained by the positioning unit with the location information stored in the location shield list storing unit, and control an application function of the mobile equipment through the over-the-air control interface according to a result of the comparing.

In the technical solutions as described above, location information associated with a function of a ME is pre-configured, and the function of the ME is controlled by comparing current location information of the ME with the preconfigured location information. Therefore, the ME is able to change its function state depending on its different locations. In this way, an organization may set a restriction for the purpose of information security, while the employees of the organization may use high-end MEs without changing the MEs frequently.

In the solution in which the mobile equipment is in control, only the mobile equipment needs modifying. The mobile equipment is controlled directly by itself. Therefore this solution is easy to be implemented and can be put into the market rapidly. Moreover, this solution does not depend on the network and the user identity module, so the user of the ME may change the operator without affecting the use of the control functions according to the present invention.

In the solution in which the user identity module is in control, the control program is installed in the user identity module. The network and the mobile equipment are not required to be modified, as long as the mobile equipment supports the toolkit control interface. The program in the user identity module may be changed during manufacture or maintenance or may be downloaded from the network or other facilities. Therefore this solution is also easy to be implemented.

In the solution in which the network is in control, because the operator may afford more expensive technologies than the users, advanced high-precision positioning technologies may be employed. In addition, because the control is performed by the network in a centralized manner, any change in the positioning technologies is transparent to the users.

### Brief Description of the Drawings

The present invention will be illustrated in detail below through the embodiments of the present invention in conjunction with the accompanying drawings:

Figure 1 is a schematic flow chart illustrating a method for controlling functions of an ME under the control of the ME according to an embodiment of the present invention;

Figure 2 is a schematic flow chart illustrating a method for controlling functions of an ME under the control of the ME according to another embodiment of the present invention;

Figure 3 is a schematic diagram illustrating the structure of modules in an ME module according to an embodiment of the present invention;

Figure 4 is a schematic diagram illustrating the structure of modules in an ME according to another embodiment of the present invention;

Figure 5 is a schematic diagram illustrating the structure of modules in a User Equipment (UE) according to an embodiment of the present invention;

Figure 6 is a schematic flow chart illustrating a method for controlling functions of an ME under the control of an SIM, according to an embodiment of the present invention;

Figure 7 is a schematic flow chart illustrating a method for controlling functions of an ME under the control of an SIM, according to another embodiment of the present invention;

Figure 8 is a schematic diagram illustrating the structure of modules in an SIM according to an embodiment of the present invention;

Figure 9 is a schematic diagram illustrating the structure of modules in a UE according to an embodiment of the present invention;

Figure 10 is a schematic flow chart illustrating a method for controlling functions of an ME under the control of a network, according to a first embodiment of the present invention;

Figure 11 is a schematic flow chart illustrating a method for controlling functions of an ME under the control of a network, according to a second embodiment of the present invention;

Figure 12 is a schematic flow chart illustrating a method for controlling functions of an ME under the control of a network, according to a third embodiment of the present invention;

Figure 13 is a schematic diagram illustrating a correlation between preconfigured location information, user lists and function states according to an embodiment of the present invention;

Figure 14 is a schematic flow chart illustrating a method for controlling functions of an ME under the control of a network, according to a fourth embodiment of the present invention;

Figure 15 is a schematic diagram illustrating the structure of a network server used in a mobile communication system according to an embodiment of the present invention; and

Figure 16 is a schematic diagram illustrating the structure of a network server used in a mobile communication system according to another embodiment of the present invention.

### Detailed Description of the Embodiments

In an embodiment of the present invention, the current location information of an ME is compared with the preconfigured location information associated with functions of the ME, and the functions of the ME are controlled according to the result of the comparison. The embodiments of the present invention may be implemented in a control mode that the ME is in control, and may also be implemented in another control mode, that the user identity module or the network is in control, on the basis of the conventional application toolkit technology or OTA technology. The embodiments of the present invention also provide device solutions corresponding to the different control modes. Embodiments employing different control modes are described in detail below.

### Solution I: an ME being in control

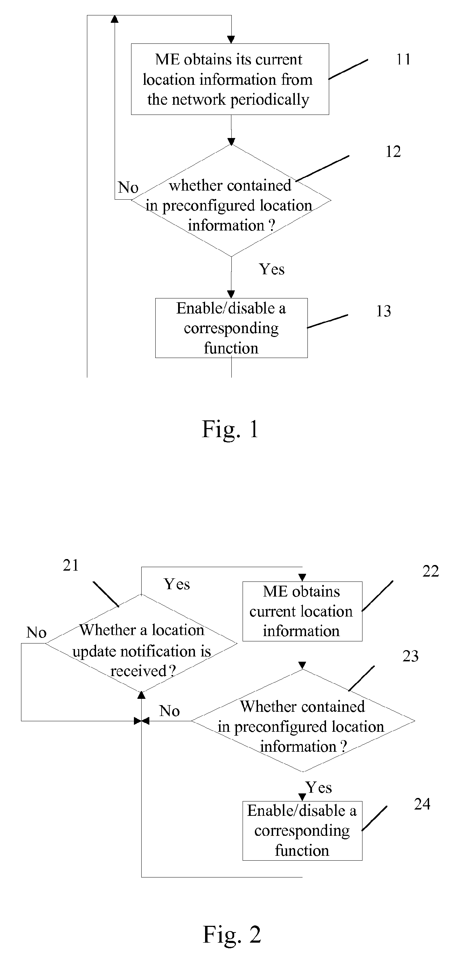

As shown in Figure 1, a method for controlling functions of an ME according to a first method embodiment of the present invention is as follows.

In Step 11, the ME obtains its own current location information from a network periodically.

The location information may be of various forms, depending on the network and the positioning approach utilized by the network. For example, the location information is usually a GIC in the format of MCC-MNC-LAC-CI in a GSM system, and is usually longitude and latitude in a GPS system. Therefore, the location information is a location code representing the location of an area in the utilized positioning approach. The location code is unique for a certain area within the coverage of the network.

In Step 12, the ME compares the current location information with preconfigured location information.

The preconfigured location information is one or more groups of location codes preconfigured and stored depending on the utilized positioning approach. Each group of the location codes is associated with a function state of the ME. For example, location codes, such as a, b and c, correspond to the disabling of camera function, and location codes, such as d, e and f, correspond to the disabling of USB interface and camera function. The preconfigured location information may be stored in a storage device of the ME, or may be stored in the user identity module used by the ME, as long as the ME may revoke the preconfigured location information when executing a comparison program.

In Step 13, if the current location information is contained in the preconfigured location information, which indicates that the ME is within an area where a function of the ME needs controlling, the function of the ME is controlled according to function states associated with the preconfigured location information.

If the current location information is not contained in the preconfigured location information, the process returns to Step 11, to continue the above described periodical obtaining and comparing.

According to the common implementation and utilization methods of the functions of ME, the functions of the ME may be controlled by use of two approaches. One approach is to directly send an enabling or disabling command to a driver program of a corresponding function. For example, to disable the camera function, a disabling command may be directly sent to the driver program of the camera. Another approach is to change the function control points on the ME, to control the functions of the ME. At present, most MEs revoke various functions by means of user-orientated program control, such as a screen menu, and key association. Therefore, the enabling or disabling of a function may be attained by sending a control command to a program controlling unit and adding/deleting the function to/from a control interface of the program controlling unit. For example, a control menu corresponding to a function may be added to or deleted from the screen menu provided by the program controlling unit. Or, a menu for a function may be enabled or disabled to be chosen, so as to enable or disable the function. To disable the photography function, for example, a control command is sent to the program controlling unit to delete the control menu for the photography function from the screen menu (or the control menu for the photography function is disabled to be chosen). In this way, the user cannot use the function.

Figure 2 shows another method for controlling functions of an ME according to a second method embodiment of the present invention. This method is similar to the method according to a first method embodiment, except that the current location information is obtained in a passively triggered manner, instead of being requested periodically. A judgment process for function control is performed each time when the ME receives a location update notification from the network. The method is as follows.

In Step 21, the ME judges whether the ME has received a location update notification from the network. If the ME has received the location update notification, the process proceeds to Step 22; otherwise, the ME continues waiting for the location update notification from the network.

In Step 22, the ME obtains its own current location information from the network.

In Step 23, the ME compares the current location information with preconfigured location information.

In Step 24, if the current location information is contained in the preconfigured location information, which indicates that the ME is within an area where a function of the ME needs controlling, the function of the ME is controlled according to the function states associated with the preconfigured location information.

If the current location information is not contained in the preconfigured location information, the process returns to the Step 21, to continue the judging process.

Compared with the method according to the first method embodiment, in the method according to the second method embodiment, more resources of the mobile equipment may be saved. However, the positioning approach supported by the method according to the second method embodiment may be restricted by the network capability. For an existing network, by using a cell-based positioning approach, a location update notification may be sent initiatively when the location of the ME is updated (i.e. when the ME is handed off between cells).

In the above described two methods according to the first and second method embodiments, the preconfigured location information may be updated from the network by means of OTA download. The contents or format of the preconfigured location information should be adjusted whenever the positioning approach is changed or the location code corresponding to the area for function control is changed due to a change of the network. The preconfigured location information may be modified by being entered into MEs respectively. However, OTA download is a more preferred solution for modification in batches. On the basis of a conventional OTA download approach, update data may be obtained by the ME through sending a request initiatively to the network, or may be directly pushed to the ME by the network.

A device for implementing the above methods will be described hereunder.

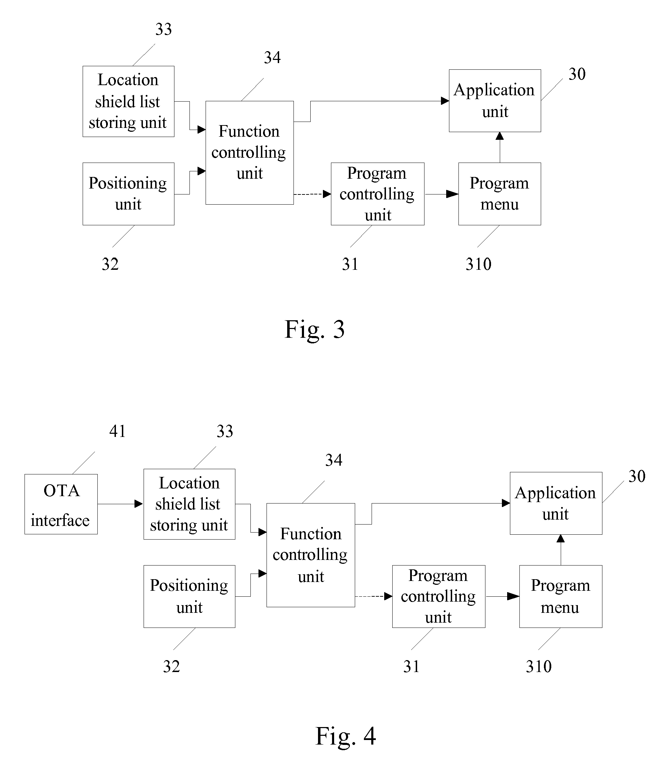

Figure 3 shows an ME according to a first mobile equipment embodiment of the present invention. The ME includes an application unit 30, a program controlling unit 31, a positioning unit 32, a location shield list storing unit 33 and a function controlling unit 34.

The application unit 30 implements an application function of the ME according to a driver program of the application unit 30. There may be various application units, such as a camera application unit, a media player application unit and a recorder pen application unit, in the ME.

The program controlling unit 31 provides program control, associated with driver programs of the application units, to a user interface of the ME. The program controlling unit may provide different control points for a same function, for example, through screen menu invoking or key association, etc. A user of the ME may invoke the functions provided by the application units via the control points provided by the program controlling unit.

The positioning unit 32 obtains current location information of the ME from the network. Based on the description in the above method embodiments, the positioning unit 32 may obtain the current location information periodically from the network, alternatively, may obtain the current location information of the ME upon the receipt of a location update notification from the network.

The location shield list storing unit 33 is adapted to store location information associated with function states of the application units of the UE.

The function controlling unit 34 compares the current location information obtained by the positioning unit 32 with location information stored in the location shield list storing unit 33, and controls the functions according to the comparison result, by sending an enabling or disabling command to the driver program of a corresponding application unit or by sending a control command to the program controlling unit (as shown by the broken line with an arrowhead in Figure 3), to add or delete a corresponding function into/from the control interface of the program controlling unit, for example, to add or delete a control menu of the corresponding function into or from the program menu 310.

It shall be noted that an application unit may have multiple control points. For example, the application unit may be invoked via a screen menu or may be activated by a direct control signal (e.g., a certain shortcut key). If the program controlling unit could not control all the multiple control points at the same time, it is more preferred to control the application unit by directly enabling/disabling the driver program of the application unit, so as to avoid the occurrence of a blind area in control.

Figure 4 shows an ME according to a second mobile equipment embodiment of the present invention. The ME according to the second mobile equipment embodiment has a structure substantively the same as that described in the first mobile equipment embodiment, except that the ME according to the second mobile equipment embodiment has an OTA interface 41. The ME may download updated location information from the network via the OTA interface 41 and store the updated location information into the location shield list storing unit 33. Thus, such ME supports the update of the location shield list from the network.

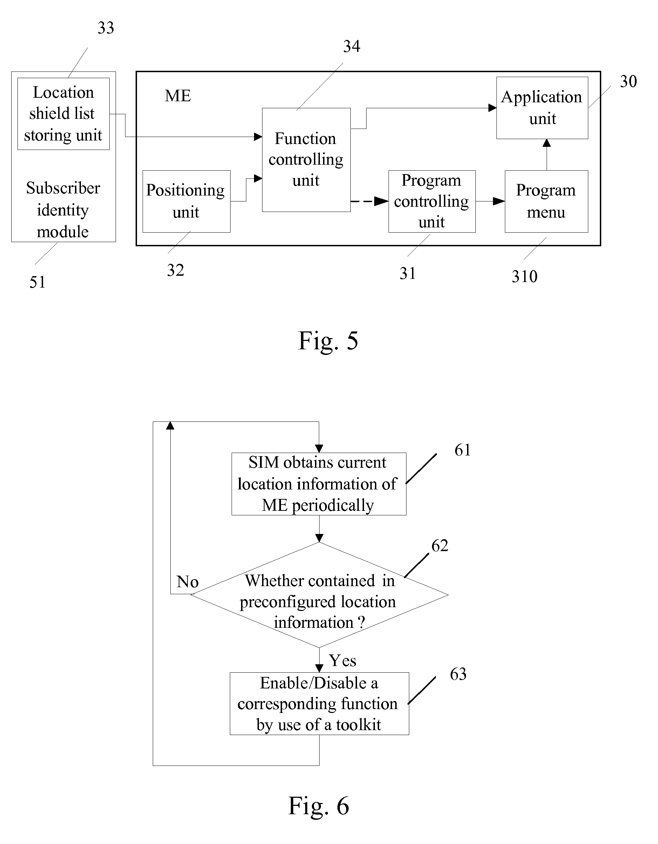

Figure 5 shows a UE according to a first user equipment embodiment of the present invention. The UE includes an ME and a user identity module. The ME has a structure substantively the same as that described in the first mobile equipment embodiment of the present invention shown in Figure 3, except that the location shield list storing unit 33 is stored in the user identity module 51, instead of being stored in the ME according to the first mobile equipment embodiment shown in Figure 3.

As can be seen from the above description of the method embodiments and the corresponding equipment embodiments of the present invention that, in the solution I, the units in control of the functions are embedded in the ME. In this way, the control function may be implemented depending on only the ME itself, so that the terminal equipment manufacturers may produce products with corresponding functions and put them on the market rapidly. The ME is in control of its own functions, so, the compatibility between equipment/equipment and the compatibility between equipment/network, as well as corresponding specifications, are not required. Therefore, the solution is easy to be implemented. Moreover, the functions are provided by the ME itself, therefore the user of the ME may change the operator (which means the change of the user identity module or even the change of network type) without affecting the use of the control function(s) provided by the embodiments of the present invention.

An example for applying the above methods and devices in a specific network and a specific application environment is described hereunder to make the solution I understood better.

Supposing that the network environment is a GSM system and the positioning approach is the cell identifying approach. A company issues to its employees a regulation of forbidding the use of ME camera within the company, for the purpose of information security. The GCIs covering the area where the company is located are 520-01-1733-5, 520-01-1733-6 and 520-01-1733-7.

In this case, an employee of the company has two choices, i.e. to use a low-end ME without a camera, or to use an ME according to the solution I of the embodiment of the present invention. The employees with the latter choice register their MEs to the information security department of the company, in other words, to write a location shield list into their MEs. A person of the information security department writes the GCIs of the cells covering the company into the location shield list of the MEs (to ensure the reliability of the control, the GCIs of neighboring cells may be written into the list as required) and associates a function to be controlled with camera. To prevent the contents of the location shield list from being modified randomly by the user of each ME, the location shield list may be configured with a security password. The security password is controlled and modified by the information security department of the company.

When an employee enters the controlled region (this region is generally greater than the area where the company is actually located, to an extent depending on the precision of the positioning approach) carrying a registered ME, the function controlling unit of the ME will determine that the current location of the ME is within the preconfigured location shield list (by a periodical determining approach or by a location update activation approach), and disable the camera application unit (by directly disabling the camera application unit or by closing the control point(s) of the camera application unit). When the employee moves out of the controlled region, the ME re-enables the function of the camera application unit after determining that the ME is out of the controlled region.

In actual application, a plurality of groups of preconfigured location information may be stored in the location shield list separately. The groups of preconfigured location information correspond to different function states respectively, to meet different restriction requirements of the organizations in different areas.

***Solution II: a user identity module being in control***

In the solution II, a user identity module controls an ME by use of an application toolkit. Therefore, the user identity module is an integration of a smart card and the application toolkit program contained in the smart card. The user identity module has different forms for different networks. To be concise in description, the different forms are collectively called SIM. For a GSM network, the so-called SIM refers to a GSM SIM card plus an SIM application toolkit. For a CDMA network, the so-called SIM refers to an RUIM card plus an application toolkit. For a UMTS network, the so-called SIM refers to a UICC plus a USIM plus a USAT plus a USAT-I.

Figure 6 shows a third method for controlling the functions of a ME according to a third method embodiment of the present invention. The method is as follows.

In Step 61, a subscriber identity module (SIM) periodically obtains current location information of the ME of the SIM through the ME. As described above, the location information is a location code, representing the location of an area, in a utilized positioning approach.

In Step 62, the SIM compares the obtained current location information with preconfigured location information. Similar to that in solution I, there may be one or more groups of preconfigured location information. The preconfigured location information may be stored in a storage device of the SIM or in a storage device of the ME of the SIM, as long as the SIM may revoke the preconfigured location information when executing a comparison program.

In Step 63, if the current location information is contained in the preconfigured location information, which indicates that the ME is within an area where a function of the ME needs controlling, the function of the ME is controlled with an application toolkit according to function states associated with the preconfigured location information.

If the current location information is not contained in the preconfigured location information, the process returns to the Step 61 to continue the above process of periodical obtaining and comparing.

Similarly, the application toolkit may control the functions of the ME by directly controlling driver programs of the functions or by controlling the control points of the driver programs.

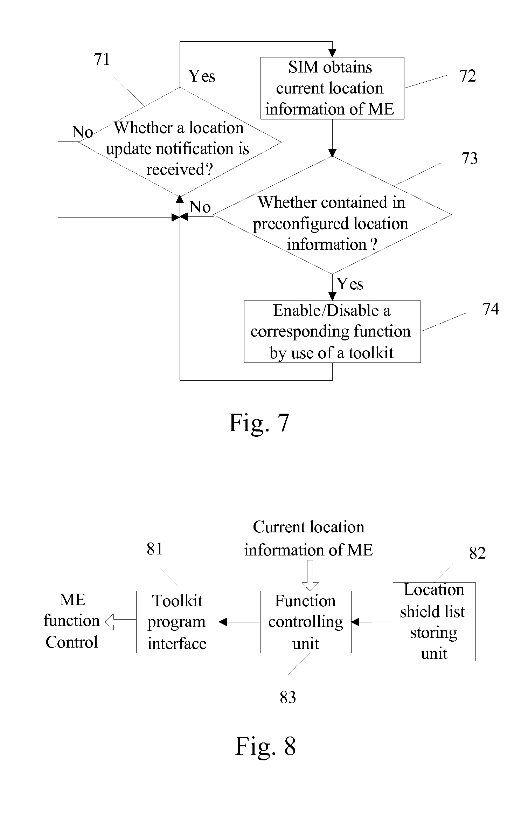

Figure 7 illustrates a fourth method for controlling functions of an ME according to a fourth method embodiment of the present invention. The fourth method is difference from the third method. The difference is similar to that between the second method embodiment and the first method embodiment as shown in solution I. In other words, in the fourth method, a judging process for function control is performed each time when the SIM receives a location update notification from the network through the ME. The fourth method is as follows.

In Step 71, the ME determines whether the ME has received a location update notification from the network. If the ME has received the notification, the process proceeds to Step 72; otherwise, the ME continues waiting for the location update notification from the network.

In Step 72, the ME obtains its own current location information from the network.

In Step 73, the current location information is compared with preconfigured location information.

In Step 74, if the current location information is contained in the preconfigured location information, which indicates that the ME is within an area where a function of the ME needs controlling, the function of the ME is controlled according to function states associated with the preconfigured location information.

If the current location information is not contained in the preconfigured location information, the process returns to the Step 71 to continue the judging process.

In the third and fourth methods, the predefined the preconfigured location information may be updated from the network by means of OTA download. In addition, on the basis of the support for toolkit technology, even the controlling program of the SIM may be downloaded through OTA download and installed into the SIM, so as to change a conventional SIM into an SIM implementing the methods according to the embodiments of the present invention.

A device for implementing the above methods will be described hereunder.

Figure 8 shows an SIM according a first user identity module embodiment of the present invention. The SIM includes a toolkit program interface 81, a location shield list storing unit 82 and a function controlling unit 83.

The toolkit program interface 81 provides the SIM with a control interface for controlling an ME of the SIM.

The location shield list storing unit 82 stores location information associated with function states of the ME.

The function controlling unit 83 obtains from the ME the current location information of the UE, compares the current location information with location information stored in the location shield list storing unit, and controls, through the toolkit program interface, a corresponding function of the ME according to the comparison result.

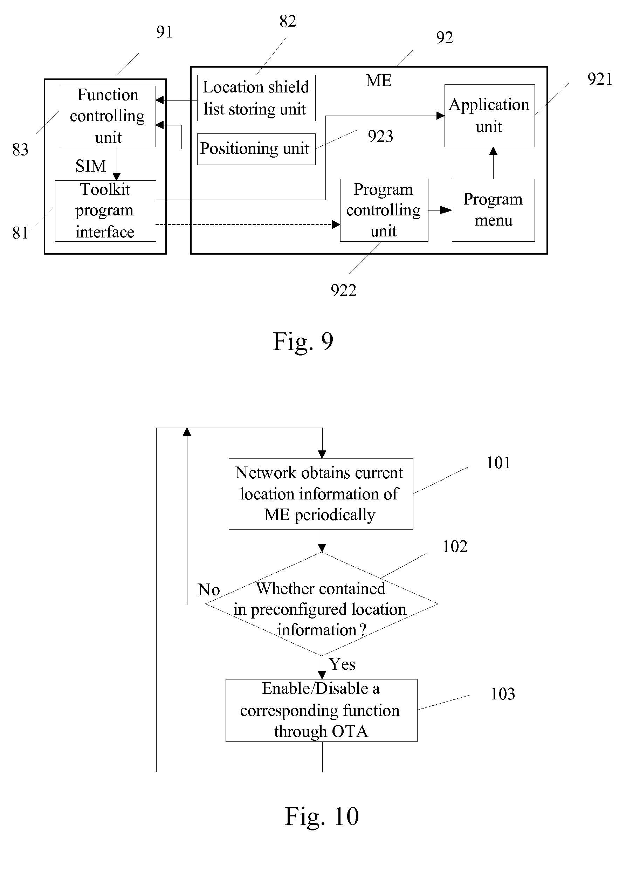

Figure 9 shows a UE according to a second user equipment embodiment of the present invention. The UE includes an SIM 91 and an ME 92. The SIM 91 includes a toolkit program interface 81 and a function controlling unit 83. The ME 92 includes at least one application unit 921, a positioning unit 923 and a location shield list storing unit 82.

The application unit(s) 921 implements application function(s) of the ME according to the driver program(s) of the application unit(s).

The program controlling unit 922 provides program control, associated with the driver programs of the application units, to a user interface of the ME.

The positioning unit 923 is adapted to obtain current location information of the ME from the network. On the basis of the description for the first and second method embodiments, the positioning unit 923 may obtain the current location information from the network periodically, and may also obtain the current location information of the ME upon the receipt of a location update notification from the network.

The location shield list storing unit 82 is adapted to store location information associated with function states of the application units of the ME.

The toolkit program interface 81 provides a control interface for the SIM to control an ME of the SIM.

The function controlling unit 83 obtains the current location information of the ME from the positioning unit of the ME, compares the current location information with location information stored in the location shield list storing unit, and controls the functions of the ME according to the comparison result through the toolkit program interface by sending an enabling or disabling command to the driver program of a corresponding application unit or by sending a control command to the program controlling unit (as shown by the broken line with an arrowhead in Figure 9), to add/delete a corresponding function to/from the control interface of the program controlling unit.

As can be seen from the above description of the method embodiments and the corresponding device embodiments of the present invention that, in solution II, the controlling unit(s) is embedded in the SIM supporting an application toolkit, so as to control the ME. Such an approach has an advantage that the network and the mobile equipment need not to be changed as long as the ME cooperated with the SIM supports the control interface(s) of the toolkit. The program in the SIM may be modified during manufacture or maintenance, and alternatively may be downloaded from the network or from other facilities. In this way, solution II is easy to be implemented. In other words, even an ordinary SIM without the functions according to the present invention may implement the functions according to the present invention by updating software. Therefore, solution II may be applied conveniently. Moreover, because the controlling is implemented by the SIM, a user may choose his favorite terminal equipment without any restriction.

An example for applying the above methods and devices in a specific network and a specific application environment is described below, to make the solution understood better.

Supposing that the network environment is a GSM system and the positioning approach is a cell identifying approach. A company issues a regulation to its employees, forbidding the use of a ME camera within the company, for the purpose of information security. The GCIs covering the area where the company is located are 520-01-1733-5, 520-01-1733-6 and 520-01-1733-7.

In this case, an employee of the company has two choices, i.e. to use a low-end ME without a camera, or to use an ME according to solution II of the present invention and register the ME to the information security department of the company. The operator provides a dedicated SIM according to the present invention to an employee with the latter choice (or pushes and installs a control program to the SIM of the employee, if the SIM supports the update of toolkit program through downloading) upon the request of the company. The GCIs of the cells covering the company are written into the location shield list of the SIM (if the SIM as shown in Figure 5 is provided, the content of the location shield list is written into the ME as in solution I) and the function to be controlled is associated with the camera. In addition, to prevent the contents of the location shield list from being modified by the user of the SIM, the location shield list may be configured with a security password.

When an employee enters the controlled region carrying an ME with a registered SIM, the function controlling unit of the SIM will determine that the current location of the ME is within the preconfigured location shield list, and then disable the camera application unit (by directly disabling the camera application unit or by closing the control points of the camera application unit) through the toolkit control interface. When the employee moves out of the controlled region, the SIM re-enables the function of the camera application unit after determining that the ME is out of the controlled region.

In the solution II, there may be a plurality of groups of preconfigured location information separately stored in the location shield list, corresponding to different function states respectively, so as to the meet different restriction requirements of organizations located at different areas.

As can be seen from the above that, solution I and solution II are similar to each other in their specific methods and devices, because both of the solutions are of a local-control-based single-machine operation mode. The difference between the two solutions lies in that, the ME is control in solution I, while the SIM is in control in solution II. The mode for storing/configuring the location shield list and the approach of obtaining the current location information may be similar in the two solutions.

### Solution III: a network being in control

Figure 10 shows a fifth method for controlling the functions of a ME according to a fifth method embodiment of the present invention. The method is as follows.

In Step 101, a network obtains current location information of an ME periodically.

As described above, the location information is a location code, representing the location of an area, in a utilized positioning approach.

In Step 102, the network compares the current location information with location information preconfigured in a network server and associated with function states of the ME.

In Step 103, if the current location information is contained in the preconfigured location information, which indicates that the ME is within an area where a function of the ME needs controlling, the network sends a control instruction to the ME via an OTA interface according to function states associated with the preconfigured location information, to control the function of the ME.

If the current location information is not contained in the preconfigured location information, the process returns to the Step 101 to continue the process of periodical obtaining and comparing. The control instruction may alternatively control, via the OTA interface, the ME functions by directly controlling the driver program of a corresponding function or by controlling the control point(s) of the driver program.

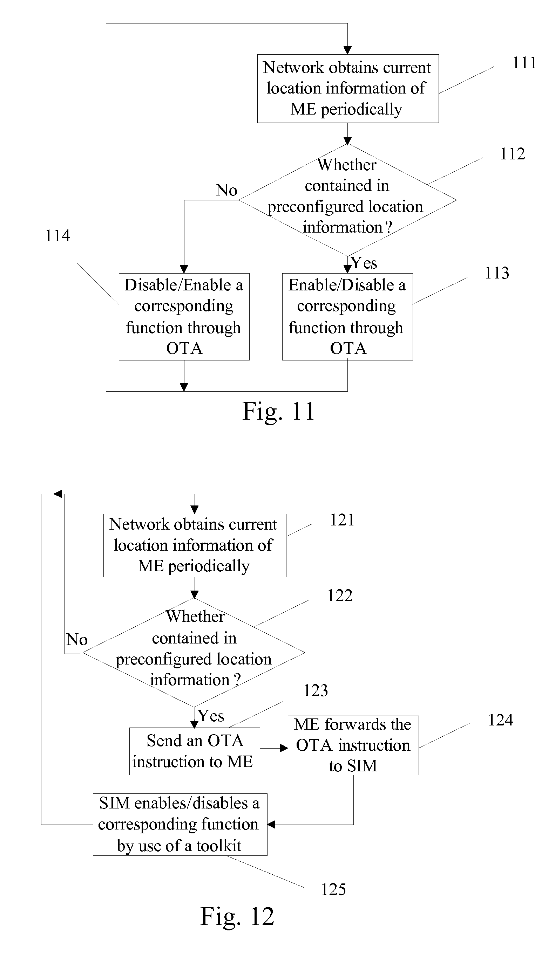

Figure 11 shows a sixth method for controlling functions of an ME according to a sixth method embodiment of the present invention. The sixth method is similar to the fifth method according to the fifth method embodiment. The difference lies in that, in the sixth method, when the current location information is not contained in the preconfigured location information, the network sends a control instruction, the function states indicated by which are opposite to that when the current location information is contained in the preconfigured location information, to the ME via the OTA interface. The sixth method is as follows.

In Step 111, a network obtains current location information of an ME periodically.

In Step 112, the network compares the current location information with location information preconfigured in a network server and associated with function states of the ME.

In Step 113, if the current location information is contained in the preconfigured location information, which indicates that the ME is within an area where a function of the ME needs controlling, the network enables/disables the function of the ME by sending a control instruction to the ME via an OTA interface according to the function states associated with the preconfigured location information.

In Step 114, if the current location information is not contained in the preconfigured location information, the network disables/enables the function of the ME by sending a control instruction to the ME via the OTA interface according to the function states associated with the preconfigured location information.

The states of function control in Step 114 are opposite to those in Step 113.

The sixth method embodiment has an advantage that the ME may receive the information of function control from the network periodically, no matter whether the ME is within a predefined control area or not. In this way, even if the ME is disconnected from the network in a period, the ME may receive an appropriate function instruction when the connection between the ME and the network is restored, thereby improving the reliability of the function control.

Figure 12 shows a seventh method for controlling functions of an ME according to a seventh method embodiment of the present invention. The seventh method is similar to the fifth method. The difference lies in that, in the seventh method, Instead of directly controlling the ME by the network via an OTA interface, an OTA instruction is forwarded to the SIM, and the SIM controls the functions of the ME according to the OTA instruction through a toolkit program. The seventh method is as follows.

In Step 121, the network obtains current location information of the ME periodically.

In Step 122, the network compares the current location information with location information preconfigured in a network server and associated with function states of the ME.

In Step 123, if the current location information is contained in the preconfigured location information, which indicates that the ME is within an area where a function of the ME needs controlling, the network sends a control instruction to the ME via an OTA interface, to control the function of the ME.

In Step 124, the ME forwards the OTA instruction to the SIM.

In Step 125, the SIM enables/disables the function of the ME through a toolkit according to the function states associated with the preconfigured location information.

If the current location information is not contained in the preconfigured location information, the process returns to Step 121 to continue the process of periodical obtaining and comparing.

Similar to the sixth embodiment, in the seventh method embodiment, the control instruction sent to an ME within the predefined control area may also be opposite to that sent to an ME outside of the predefined control area.

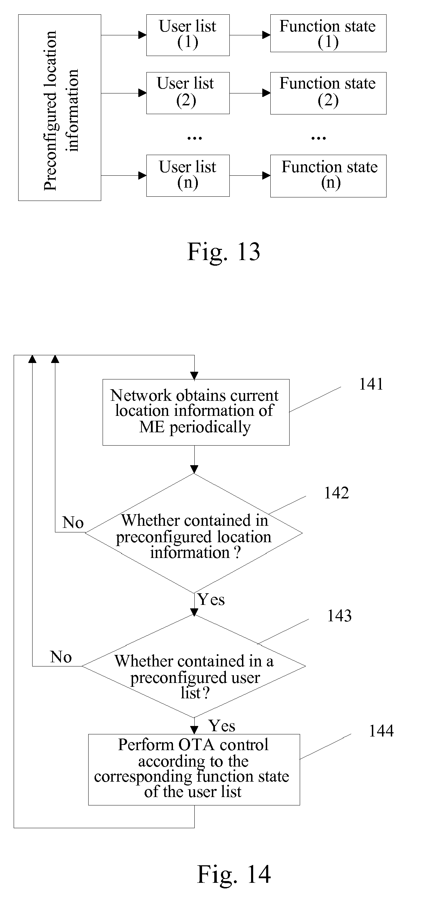

An eighth method for controlling functions of an ME according to an eighth method embodiment is described below. In the eighth method, in addition to the preconfigured location information, a user list associated with the preconfigured location information is also predefined in a network server. There may be one or more groups of user lists associated with corresponding function states. Figure 13 shows a relationship between the preconfigured location information, the user lists and the function states. In Figure 13, one group of preconfigured location information is associated with n groups of user lists. A user list numbered i (i=1∼n) corresponds to a function state with the same number i.

Figure 14 shows a flow chart of the eighth method embodiment. The method is as follows.

In Step 141, a network obtains current location information of an ME periodically.

In Step 142, the network compares the current location information with preconfigured location information, to judge whether the current location information is contained in the preconfigured location information. If the current location information is contained in the preconfigured location information, the process proceeds to Step 143; otherwise, the process returns to Step 141 to continue the process of periodical obtaining and comparing.

In Step 143, the network judges whether a user is recorded in preconfigured user list(s) according to information of the user provided by the SIM of the ME. If there are multiple groups of user lists, the network further judges which group of user lists contains the user.

In Step 144, if the current location information is contained in the preconfigured location information and the user is recorded in a user list, the network sends a control instruction to the ME via an OTA interface according to a function state associated with the user list, to control a function of the ME.

If the current location information is not contained in the preconfigured location information, or the current location information is contained in the preconfigured location information but the user is not recorded in any user list, the process returns to Step 141 to continue the process of periodical obtaining and comparing. The eighth method embodiment has an advantage that adverse influence due to positioning error may be decreased as much as possible by limiting the effective users to be controlled. This is because there is a certain precision limit no matter which positioning approach is used. In other words, there is generally an error in a range actually covered by the preconfigured location information when compared with the desired area to be covered by the preconfigured location information. Such an error may be significantly great for the cell identifying approach commonly used. In this case, the network-based control may impose unnecessary restriction on functions of a number of MEs of users not belonging to a controlled organization. If the objects to be controlled are explicitly specified as a predefined user group (e.g., the staff belonging to the organization), the adverse influence due to such an error in the location range may be decreased to the minimum. Another advantage of the eighth method embodiment lies in that, different organizations in the same area may be provided with different function control services. There may be two or more organizations in the same area, which have function restriction requirements in conflict. For example, organization A and organization B are covered by the same area. Organization A requires the disabling of camera while record function is allowed, and organization B requires the disabling of the record function while the camera is allowed. In this case, two user groups (corresponding to the staffs of organization A and organization B) may be predefined for the same area, the two user groups are associated with function states required by the corresponding organizations. In this way, the problem may be solved.

In the fifth method embodiment to the eighth method embodiment described above, the enabling or disabling state of a controlled function of the ME may be set as a normal state. If no control instruction is received from the network in a period, the state of the controlled function may be restored to the normal state. In this way, the absence of control due to a connection break between the ME and the network may be avoided, thus ensuring the reliability of the control. In the above methods, in addition to the method of obtaining the current location information of an ME periodically, the network may utilize a triggering method based on the location update of the ME to obtain the current location information of the ME.

A device for implementing the above methods in solution III will be described hereunder.

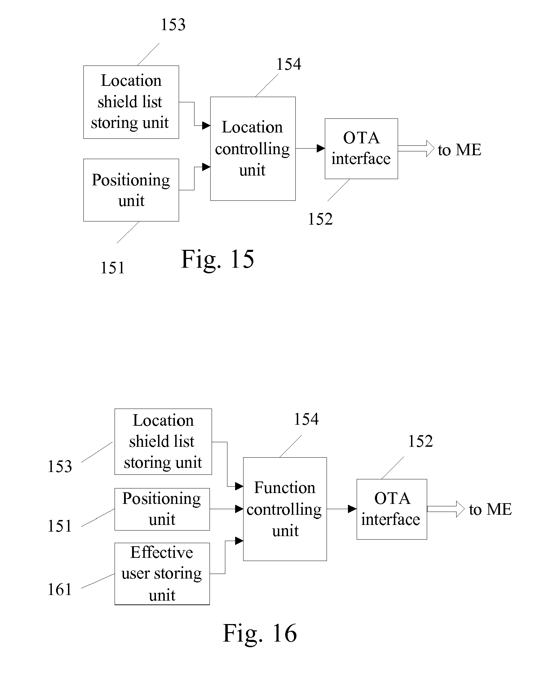

Figure 15 shows a network server used in a mobile communication system according to a first network server embodiment of the present invention. The network server includes a positioning unit 151, an OTA interface 152, a location shield list storing unit 153 and a function controlling unit 154.

The location unit 151 is adapted to obtain current location information of an ME.

The OTA interface 152 provides a control interface for the network server to control the ME.

The location shield list storing unit 153 is adapted to store location information associated with function states of the ME.

The function controlling unit 154 compares the current location information obtained by the positioning unit with the location information stored in the location shield list storing unit 153, and sends, through the OTA interface 152, an over-the-air control instruction to the ME according to the comparison result, to control a corresponding function of the ME.

Figure 16 shows a network server used in a mobile communication system according to a second network server embodiment of the present invention. The network server includes a positioning unit 151, an OTA interface 152, a location shield list storing unit 153, an effective user storing unit 161 and a function controlling unit 154.

The location unit 151 is adapted to obtain current location information of an ME.

The OTA interface 152 provides a control interface for the network server to control the ME.

The location shield list storing unit 153 is adapted to store location information associated with function states of the ME.

The effective user storing unit 161 is adapted to store one or more groups of user lists associated with the location information stored in the location shield list storing unit 153. The one or more groups of user lists correspond to corresponding function states respectively.

The function controlling unit 154 compares the current location information obtained by the positioning unit 151 with the location information stored in the location shield list storing unit 153. If the current location information is not contained in the preconfigured location information, the function controlling unit 154 does not send a control instruction. If the current location information is contained in the preconfigured location information, the function controlling unit 154 judges whether the user is recorded in the user lists. If the user is not recorded in any of the user lists, the function controlling unit 154 does not send a control instruction. If the user is recorded in a user list, the function controlling unit 154 sends, through the OTA interface 152, a control instruction to the ME according to function states associated with the user list, to control the function(s) of the ME.

As can be seen from the above method embodiments and the corresponding device embodiments of the present invention in solution III, the controlling unit is disposed in the network server, and the ME is controlled through the OTA interface. The difference of solution III from solutions I and II lies in that, solution III provides a network-based remote centralized control approach, and may control a number of users at the same time. Therefore, solution III has an advantage of convenient maintenance. For example, preconfigured information may be modified and/or updated by only configuring the network server, without any need of modifying or updating the terminals one by one. In addition, this improves the security of the preconfigured information. Moreover, the operator may afford more expensive technologies than the users, and therefore may employ advanced high-precision positioning technologies. Because the control is performed by the network in a centralized manner, any change in the positioning technologies is transparent to the users, thereby allowing service update more easily to be implemented.

An example for applying the above methods and devices in a specific network and a specific application environment is described hereunder to make the solution III understood better.

It is supposed that the network environment is a GSM system and the positioning approach is the cell identifying approach. A company issues a regulation to its employees, forbidding the use of a ME camera within the company, for the purpose of information security. The GCIs covering the area where the company is located are 520-01-1733-5, 520-01-1733-6 and 520-01-1733-7.

In this case, the company needs to register a service for the information security with a network operator, and provide a list of functions to be restricted to the network operator. The network operator writes the GCIs covering the area where the company is located into a location shield list on a network server, and associates the GCIs with corresponding function states of ME (if the network operator provides the service according to the eighth method, it also writes user identification information of the staff of the company into a corresponding user list).

When an ME used by an employee of the company moves into the controlled region, the function controlling unit of the network determines that the current location of the ME is within the preconfigured location shield list, and then disables the camera application unit (by directly disabling the camera application unit or by closing the control point(s) of the camera application unit) through an OTA control interface. When the employee moves out of the controlled region, the function controlling unit of the network re-enables the camera application unit after determining that the ME is out of the controlled region.

A method and device for controlling functions of a mobile equipment according to the present invention has been described in detail. The principle and embodiments of the present invention are described with specific examples. The description of the embodiments is only intended to facilitate the understanding of the methods and devices according to the present invention. Variation and modification may be made to the embodiments and applications by those skilled in the art in light of the concept of the present invention. In summary, the disclosure in the description should not be understood as a limitation to the present invention.

## Claims

1. A method for controlling functions of a mobile equipment, comprising:
obtaining current location information of a mobile equipment;
comparing the current location information with preconfigured location information associated with a function state of the mobile equipment; and
controlling a function of the mobile equipment according to a result of the comparing.

2. The method for controlling functions of a mobile equipment according to claim 1,
wherein obtaining the current location information of the mobile equipment comprises:
obtaining, by the mobile equipment, its own current location information periodically from a network; or
obtaining, by the mobile equipment, its own current location information when the mobile equipment updates its own location.

3. The method for controlling functions of a mobile equipment according to claim 2,
wherein controlling the function of the mobile equipment according to the result of the comparing comprises:
sending, by the mobile equipment or a user identity module used by the mobile equipment, a enabling or disabling instruction to a driver program of the function according to the result of the comparing; or
adding or deleting, by the mobile equipment or the user identity module, the function to or from a control interface of the function via a control instruction.

4. The method for controlling functions of a mobile equipment according to claim 2,
wherein the preconfigured location information is stored on the mobile equipment.

5. The method for controlling functions of a mobile equipment according to claim 1,
wherein obtaining the current location information of the mobile equipment comprises:
obtaining, by a network, the current location information of the mobile equipment periodically.

6. The method for controlling functions of a mobile equipment according to claim 5,
wherein controlling the function of the mobile equipment according to the result of the comparing:
sending, by the network, a control instruction to the mobile equipment according to the result of the comparing;
controlling, by the mobile equipment, the function of the mobile equipment according to the control instruction; or
forwarding, by the mobile equipment, the control instruction to a user identity module used by the mobile equipment; and controlling, by the user identity unit, the function of the mobile equipment according to the control instruction.

7. The method for controlling functions of a mobile equipment according to claim 5 or 6, further comprising:
pre-configuring, by the network, a user list associated with the preconfigured location information, the user list being one or more groups of user lists associated with corresponding function states;
if the current location information is contained in the preconfigured location information, judging whether a user of the mobile equipment is recorded in the user list according to information of the user provided by a user identity module used by the mobile equipment; and
if the user is recorded in the user list, executing the procedure of controlling the function of the mobile equipment according to the result of the comparing.

8. The method for controlling functions of a mobile equipment according to claim 5 or 6, further comprising:
setting, by the mobile equipment, an enabling or disabling state of a function to be controlled as a normal state; and
restoring the state of the function to be controlled to the normal state if no control instruction is received from the network in a period.

9. A mobile equipment, comprising:
an application unit, adapted to implement an application function of the mobile equipment according to a diver program of the application unit; and
a program controlling unit, adapted to provide program control associated with the driver program of the application unit to a user interface of the mobile equipment;
wherein, the mobile equipment further comprises:
a positioning unit, adapted to obtain current location information of the mobile equipment from a network periodically;
a location shield list storing unit, adapted to store location information associated with a function state of the application unit of the mobile equipment; and
a function controlling unit, adapted to compare the current location information obtained by the positioning unit with the location information stored in the location shield list storing unit, and send an enabling or disabling instruction to the driver program of the application unit, or send a control instruction to the program controlling unit to add or delete the application function to or from a control interface of the program controlling unit, according to a result of the comparing.

10. The mobile equipment according to claim 9, further comprising:
a location information updating unit, adapted to obtain location information associated with the function state of the application unit of the mobile equipment from the network, and update the location shield list storing unit by storing the location information into the location shield list storing unit.

11. A user equipment, comprising a mobile equipment and a user identity module, the mobile equipment comprising:
an application unit, adapted to implement a function of the mobile equipment according to a diver program of the application unit; and
a program controlling unit, adapted to provide program control associated with the driver program of the application unit to a user interface of the mobile equipment;
wherein the user identity module comprises:
a location shield list storing unit, adapted to store location information associated with a function state of the application unit of the mobile equipment;
the mobile equipment further comprises:
a positioning unit, adapted to obtain current location information of the mobile equipment from the network periodically; and
a function controlling unit, adapted to compare the current location information obtained by the positioning unit with the location information stored in the location shield list storing unit, and send an enabling or disabling instruction to the driver program of the application unit, or send a control instruction to the program controlling unit to add or delete the function to or from a control interface of the program controlling unit, according to a result of the comparing.

12. A user equipment, comprising a mobile equipment and a user identity module, wherein the mobile equipment comprises an application unit and a program controlling unit, the user identity module comprises a toolkit program interface, and
the application unit is adapted to implement a function of the mobile equipment according to a diver program of the application unit,
the program controlling unit is adapted to provide program control associated with the driver program of the application unit to a user interface of the mobile equipment,
the toolkit program interface is adapted to provide a control interface for the user identity module to control a mobile equipment of the user identity module;
wherein the mobile equipment further comprises a positioning unit and a location shield list storing unit, the user identity module further comprises a function controlling unit, and
the positioning unit is adapted to obtain current location information of the mobile equipment from a network periodically;
the location shield list storing unit is adapted to store location information associated with a function state of the application unit of the mobile equipment; and
the function controlling unit is adapted to obtain the current location information of the mobile equipment from the positioning unit, compare the current location information with the location information stored in the location shield list storing unit, and send an enabling or disabling instruction to the driver program of the application unit, or send a control instruction to the program controlling unit to add or delete the function to or from a control interface of the program controlling unit, via the toolkit program interface according to a result of the comparing.

13. A user identity module, comprising
a toolkit program interface, adapted to provide a control interface for the user identity module to control a mobile equipment of the user identity module;
wherein the user identity module further comprises a location shield list storing unit and a function controlling unit;
the location shield list storing unit is adapted to store location information associated with a function state of the mobile equipment; and
the function controlling unit is adapted to obtain current location information of the mobile equipment from the mobile equipment periodically, compare the current location information with the location information stored in the location shield list storing unit, and control a function of the mobile equipment via the toolkit program interface according to a result of the comparing.

14. A network server used in a mobile communication system, comprising an over-the-air control interface adapted to provide a control interface for the network server to control a mobile equipment;
wherein the network server further comprises a positioning unit, a location shield list storing unit and a function controlling unit;
the positioning unit is adapted to obtain current location information of the mobile equipment periodically;
the location shield list storing unit is adapted to store location information associated with a function state of the mobile equipment; and
the function controlling unit is adapted to compare the current location information obtained by the positioning unit with the location information stored in the location shield list storing unit, and control a function of the mobile equipment via the over-the-air control interface according to a result of the comparing.

15. The network server used in a mobile communication system according to claim 14,
wherein the network server further comprises an effective user storing unit;
the effective user storing unit is adapted to store one or more groups of user lists associated with the location information stored in the location shield list storing unit, the one or more groups of user lists corresponding to corresponding function states; and
the function controlling unit is adapted to, after determining that the current location information obtained by the positioning unit is contained in the location information stored in the location shield list storing unit, judge whether a user of the mobile equipment is recorded in the one or more groups of user lists according to information of the user provided by a user identity module used by the mobile equipment, and control a function of the mobile equipment through the over-the-air control interface according to the result of the comparing.
